(19) Europäisches Patentamt
European Patent Office
Office européen des brevets

(11) Publication number: **0 435 324 B1**

(12) **EUROPEAN PATENT SPECIFICATION**

(45) Date of publication of patent specification: **06.07.94**   (51) Int. Cl.⁵: **G11B 5/704**

(21) Application number: **90125689.1**

(22) Date of filing: **28.12.90**

(54) **Magnetic recording medium having an improved back coat layer.**

(30) Priority: **29.12.89 JP 342957/89**
**22.02.90 JP 41711/90**

(43) Date of publication of application:
**03.07.91 Bulletin 91/27**

(45) Publication of the grant of the patent:
**06.07.94 Bulletin 94/27**

(84) Designated Contracting States:
**DE FR GB**

(56) References cited:
**EP-A- 0 277 783**
**US-A- 4 582 757**

**PATENT ABSTRACTS OF JAPAN vol. 12, no. 097 (P-682)March 30, 1988 & JP-A-62 231 418 (TOSHIBA CORP ) October 12, 1987**

(73) Proprietor: **SONY CORPORATION**
**7-35, Kitashinagawa 6-chome**
**Shinagawa-ku**
**Tokyo(JP)**

(72) Inventor: **Miyazaki, Takahiro, c/o SONY MAGNETIC PROD., INC.**
**5-6, Kitashinagawa 6-chome,**
**Shinagawa-ku**
**Tokyo(JP)**
Inventor: **Inoue, Makoto, c/o SONY MAGNETIC PRODUCTS., INC.**
**5-6, Kitashinagawa 6-chome,**
**Shinagawa-ku**
**Tokyo(JP)**
Inventor: **Yamaga, Minoru, c/o SONY MAGNETIC PRODUCTS., INC.**
**5-6, Kitashinagawa 6-chome,**
**Shinagawa-ku**
**Tokyo(JP)**

(74) Representative: **TER MEER - MÜLLER - STEINMEISTER & PARTNER**
**Mauerkircherstrasse 45**
**D-81679 München (DE)**

**Description**

Field of the Invention

This invention relates to a magnetic recording medium such as a magnetic tape and more particularly, to an improvement of a back coat layer of the magnetic recording medium.

Description of the Prior Art

In ordinary magnetic recording mediums such as magnetic tapes including video tapes and audio tapes, and floppy disks, it is usual to apply, onto a nonmagnetic support such as a polyester film, magnetic paints obtained by dispersing magnetic powders such as a fine powder of a ferromagnetic material, resin binders, dispersants, lubricants or the like in organic solvents and mixing them thereby forming a magnetic layer.

On the other hand, with magnetic recording mediums of the type which are severely required to have stable runnability such as video tapes, formation of a back coat layer has been widely made wherein the nonmagnetic support is coated with a paint for the back coat layer on a side on which the magnetic layer has not been formed. By this, the magnetic recording medium is prevented from disorder in winding and is improved with respect to the surface properties, runnability and endurance.

In the back coat layer, the surface properties are important. When the surface properties of the back coat layer are poor, e.g. the surface roughness is great, there arise problems that (1) when a magnetic layer is formed after formation of the back coat layer, electromagnetic conversion characteristics at the inner side of the wound medium are degraded, and (2) when the medium is stored over a long term (especially at high temperatures), the electromagnetic conversion characteristics at the inner side of the wound medium becomes poor. In contrast, when the back coat layer has too good surface properties, there also arise the problems that (1) when the layer is cured while being superposed with the magnetic surface, the magnetic surface and the back coat surface are liable to stick each other, resulting in a great number of dropout defects, and (2) when the medium is stored over a long term under high temperature conditions, sticking may take place.

Up to now, it has been generally accepted that the surface roughness of the back coat layer is approximately in the range of from 0.03 to 0.05 $\mu$ m (i.e. 30 to 50 nm) as described, for example, in Japanese Laid-open Patent Application NO. 62-231418.

However, under circumstances where the high performance of magnetic tapes such as by the fineness of magnetic powder has now been made, it is difficult to provide satisfactory electromagnetic conversion characteristics with use of such a surface roughness as mentioned above.

SUMMARY OF THE INVENTION

It is accordingly an object of the invention to provide a magnetic recording medium which is improved in runnability while suppressing the electromagnetic conversion characteristics from being degraded with a reduced degree of stickiness and a reduced number of dropout defects.

It is another object of the invention to provide a magnetic recording medium of the type which comprises a magnetic layer on one side of a nonmagnetic support and a back coat layer formed on the other side of the support and wherein the surface roughness of the back coat layer is defined in a certain range.

The above objects can be achieved, according to the invention, by a magnetic recording medium which comprises a nonmagnetic support, a magnetic layer formed on one side of the nonmagnetic support, and a back coat layer formed on the other side of the nonmagnetic support and made of a dispersion of nonmagnetic particles in a resin binder, the back coat layer having (1) a center line average roughness, Ra, of Ra $\leq$ 20 nm, and (2) the number of protuberances, n, having a height of not smaller than 60 nm per unit area by m$^2$ of the back coat layer of 3 x 10$^9$ $\leq$ n $\leq$ 9 x 10$^9$.

DESCRIPTION OF THE PREFERRED EMBODIMENTS

In the practice of the invention, the particle size and content of nonmagnetic pigment particles contained in the back coat layer are properly selected so that the surface roughness of the back coat layer as expressed by the center line average roughness, Ra, which is defined in JIS B0601, is within a range of Ra of not larger than 20 nm. If two or more nonmagnetic pigment particles are combined, the ratio, dispersion time and manner of dispersion should be properly selected to satisfy the above requirement for the surface roughness.

If the center line average roughness, Ra, of the back coat layer exceeds 20 nm, the electromagnetic conversion characteristics are degraded.

However, too good surface properties may present the problems on the stickiness and dropout defects. In practical applications, the center line average roughness, Ra, should preferably in the range of from 8 to 18 nm.

The nonmagnetic pigment particles used to control the surface roughness of the back coat layer should preferably be fine particles of carbon such as carbon black. If necessary, there may be further used in combination with the carbon particles, particles of hematite, mica, silica gel, magnesium oxide, zinc sulfide, tungsten carbide, boron nitride, starch, zinc oxide, kaolin, talc, clay, lead sulfate, barium carbonate, calcium carbonate, magnesium carbonate, boehmite ( $\tau$ -Al$_2$O$_3$ • H$_2$O), alumina, tungsten sulfide and titanium oxide, polytetrafluoroethylene powder, polyethylene powder, polyvinyl chloride powder, metallic powders and the like.

Most preferably, carbon particles having different sizes are used and mixed such as by a kneader, thereby ensuring good dispersability.

The carbon particles used should preferably be a combination of particles having an average size of from 15 to 25 nm and particles having an average size of from 250 to 400 nm. The particles having a smaller size should preferably be contained in amounts of not less than 90 wt% of the combination.

By using the combination, protuberances of the larger-size particles are uniformly dispersed in or above the surface of the back coat layer, thereby suppressing the electromagnetic conversion characteristics from being degraded along with the problems of the stickiness and dropout defects being solved.

In the practice of the invention, protuberances having a height from the center line of not smaller than 60 nm on the surface of the back coat layer should be present at $3 \times 10^9$ to $9 \times 10^9$/m$^2$ of the layer surface. Such protuberances can prevent the electromagnetic conversion characteristics from being degraded and ensure good runnability and endurance.

Addition of higher fatty acids to the back coat layer is effective in overcoming the problem of the stickiness. Especially, higher fatty acids are effective when carbon particles are used. Examples of the higher fatty acids include those acids having 12 or higher carbon atoms and the acids may be saturated, unsaturated, linear or branched in nature. Specific examples include lauric acid, myristic acid, stearic acid, iso-stearic acid, oleic acid and the like. The higher fatty acid should preferably be added in an amount of 0.3 to 6 parts by weigh per 100 parts by weight of the total of nonmagnetic pigment particles in the back coat layer.

The higher fatty acid serves as a so-called releasing agent and if such a acid is added, any problem on stickiness or dropout defects does not occur even when the surface roughness of the back coat layer is smaller.

The back coat layer is formed by kneading nonmagnetic pigment particles such as carbon particles, higher fatty acids and resin binders in organic solvents to prepare a paint for the back coat layer and applying the paint on a side of a nonmagnetic support opposite to the magnetic layer. The binders and organic solvents used for this purpose may be those known in the art without any limitation.

Examples of the binder include vinyl chloride-vinyl acetate copolymers, vinyl chloride-vinyl acetate-vinyl alcohol copolymers, vinyl chloride-vinyl acetate-maleic acid copolymers, vinyl chloride-vinylidene chloride copolymers, vinyl chloride-acrylonitrile copolymers, acrylic ester-acrylonitrile copolymers, acrylic ester-vinylidene chloride copolymers, methacrylic acid-vinylidene chloride copolymers, methacrylic ester-styrene copolymers, thermoplastic polyurethane resins, phenoxy resins, polyvinyl fluoride, vinylidene chloride-acrylonitrile copolymers, butadiene-acrylonitrile copolymers, acrylonitrile-butadiene-methacrylic acid copolymers, polyvinyl butyral, cellulose derivatives, styrene-butadiene copolymers, polyester resins, phenolic resins, epoxy resins, thermosetting polyurethane resins, urea resins, melamine resins, alkyd resins, urea-formaldehyde resins and mixtures thereof. Of these, polyurethane resins, polyester resins, acrylonitrile-butadiene copolymers and the like which can impart flexibility are preferred. These may be incorporated with isocyanate compounds as a crosslinking agent or may be modified with appropriate polar group or groups in order to improve endurance.

The organic solvents may be general-purpose solvents including, for example, ketones such as acetone, methyl ethyl ketone, cyclohexanone and the like, esters such as methyl acetate, ethyl acetate, butyl acetate, ethyl lactate, glycol monoethyl acetate and the like, glycol ethers such as glycol dimethyl ether, glycol monoethyl ether, dioxane and the like, aromatic hydrocarbons such as benzene, toluene, xylene and the like, and organic chlorine compounds such as methylene chloride, ethylene chloride, carbon tetrachloride, chloroform, ethylene chlorohydrin, dichlorobenzene and the like.

If necessary, dispersants, lubricants, antistatic agents, rust preventives and the like may be further added. These dispersants, lubricants, rust preventives and the like may be those ordinarily used for this purpose.

The magnetic layer formed on the other side with respect to the back coat layer may be formed by applying a magnetic paint on the nonmagnetic support. Any magnetic paint ordinarily used on magnetic recording mediums of the known coating type. More particularly, magnetic powders, binders, dispersants, lubricants and the like which are used in known mediums are also usable in the practice of the invention.

The material for the nonmagnetic support may be one which are ordinarily used in this type of magnetic recording medium. Examples of such materials include polyesters such as polyethylene terephthalate, polyolefins such as polyethylene, polypropylene and the like, cellulose derivatives such as cellulose acetate, cellulose diacetate, cellulose acetate butyrate and the like, vinyl resins such as polyvinyl chloride, polyvinylidene chloride and the like, plastics such as polycarbonates, polyimides, polyamides, polyamide-imides and the like, paper, metals such as aluminum, copper and the like, light alloys such as aluminum alloys, titanium alloys and the like, ceramics, single crystal silicon and the like. The nonmagnetic support may be in the form of films, tapes, sheets, disks, cards, drums and the like.

The present invention is more particularly described by way of examples, which are not limitative.

## Back Coat Paint A

| | |
|---|---|
| Carbon (average size 19 nm) | 97 parts by weight |
| Carbon (average size 270 nm) | 3 parts by weight |
| Nitro cellulose | 55 parts by weight |
| Polyurethane (containing 0.1 mmol/g of $-SO_3Na$ and having a number average molecular weight of 18,000) | 45 parts by weight |
| Methyl ethyl ketone | 450 parts by weight |
| Toluene | 450 parts by weight |
| Cyclohexanone | 100 parts by weight |

## Back Coat Paint B

| | |
|---|---|
| Carbon (average size 19 nm) | 97 parts by weight |
| Carbon (average size 270 nm) | 3 parts by weight |
| Vinyl chloride copolymer (containing 0.05 mmol/g of a tertiary amine and having an average degree of polymerization of 350) | 50 parts by weight |
| Polyurethane (containing 0.08 mmol/g of $-SO_3Na$ and having a number average molecular weight of 21,000) | 20 parts by weight |
| Methyl ethyl ketone | 450 parts by weight |
| Toluene | 450 parts by weight |
| Cyclohexanone | 100 parts by weight |

The above back coat paint A or B was dispersed in a sand mill, to which a higher fatty acid and a curing agent (15 parts by weight of Coronate HL for the back coat paint A and 15 parts by weight of Coronate L for the back coat paint B). After 1 hour, the dispersion was applied onto a polyethylene terephthalate film.

Thereafter, the polyethylene terephthalate on which the back coat layer had been form by application of the back coat paint A or B was further applied with a magnetic paint A of the following composition on the other side to the back coat layer to form a magnetic layer.

## Magnetic Paint A

| | |
|---|---|
| Magnetic metal powder (specific surface area 55 $m^2/g$) | 100 parts by weight |
| Vinyl chloride copolymer (containing 0.12 mmol/g of $-SO_3Na$ and having an average degree of polymerization of 380) | 12 parts by weight |
| Polyurethane | 12 parts by weight |
| (polyester-polyurethane) (containing 0.16 mmol/g of $-SO_3Na$ and having a number average molecular weight of 24,000) | |
| Carbon | 2 parts by weight |
| Alumina | 8 parts by weight |
| Methyl ethyl ketone | 100 parts by weight |
| Toluene | 60 parts by weight |
| Cyclohexanone | 60 parts by weight |

The magnetic paint A was dispersed n a sand mill, followed by addition of 1 part by weight of stearic acid and 5 parts by weight of a curing agent (Coronate L) and applying 1 hour after the addition.

Sample tapes of Examples 1 to 8 were made according to the above procedure. The type of back coat paint, the type and amount of higher fatty acid and the surface roughness (center line average roughness, Ra) in the respective sample tapes are shown in Table 1. The surface roughness of Comparative Examples 3 and 4 was controlled by shortening the dispersion time and was also controlled in Comparative Example 5 by changing the ratio of two types of carbon of from 19 nm:270 nm = 97:3 to 19 nm:270 nm = 90:10.

## Table 1

| | Back Coat Layer | Higher Fatty Acid | | Ra |
| | | Type | Amount | (nm) |
|---|---|---|---|---|
| Example 1 | A | myristic acid | 0.5 | 11.4 |
| Example 2 | A | myristic acid | 1.5 | 10.6 |
| Example 3 | A | myristic acid | 3 | 11.6 |
| Example 4 | A | isostearic acid | 2 | 11.5 |
| Example 5 | A | stearic acid | 2 | 13.0 |
| Example 6 | B | oleic acid | 1 | 17.2 |
| Example 7 | B | oleic acid | 2 | 16.8 |
| Example 8 | B | oleic acid | 3 | 17.4 |
| Comp. Ex. 1 | A | - | - | 12.3 |
| Comp. Ex. 2 | B | - | - | 18.2 |
| Comp. Ex. 3 | A | - | - | 25.7 |
| Comp. Ex. 4 | A | - | - | 29.3 |
| Comp. Ex. 5 | A | myristic acid | 3 | 32.1 |

The above sample tapes were subjected to determination of Y-S/N, separation by sticking and dropout defects. The Y-S/N value was measured at 7 MHz/6 MHz and the dropout defects were determined by recording the tape with signals of 7 MHz and evaluated as O when the number of defects of not less than -16 dB/10 $\mu$ seconds are not larger than 10, $\triangle$ when the number of defects are in the range of from 11 to 20, ▲ when the number of defects are in the range of from 20 to 40 and X when the number of defects are not smaller than 40.

The separation by sticking was evaluated by winding each sample tape about a reel, keeping under conditions of a temperature of 45°C and a relative humidity of 85% for 60 hours and evaluation of a degree of separation through visual observation by a ten-point method wherein 1 is the best and 10 is the worst. The results are shown in Table 2.

Table 2

|  | Y-S/N | Separation by Sticking | Dropout Defects |
|---|---|---|---|
| Example 1 | + 0.1 | 2 | O |
| Example 2 | + 0.2 | 1 | O |
| Example 3 | + 0.1 | 1 | O |
| Example 4 | 0 | 1 | O |
| Example 5 | -0.1 | 1 | O |
| Example 6 | -0.3 | 1 | O |
| Example 7 | -0.1 | 1 | O |
| Example 8 | -0.1 | 1 | O |
| Comp. Ex. 1 | 0 | 6 | X |
| Comp. Ex. 2 | -0.3 | 5 | X |
| Comp. Ex. 3 | -1.6 | 3 | ▲ |
| Comp. Ex. 4 | -1.9 | 2 | △ |
| Comp. Ex. 5 | -2.2 | 1 | O |
| Note: the Y-S/N values are relative values when that of | | | |

Comparative Example 1 was taken as 0 dB.

As will be apparent from table 2, when the center line average roughness of the back coat layer was not larger than 20 nm, the Y-S/N value was improved by approximately 2 dB.

The use of the higher fatty acids could solve the problems on the stickiness and the dropout defects.

The influence of the protuberances formed on or above the surface of the back coat layer was determined.

## Back Coat Paint C

| | |
|---|---|
| Carbon (average size 19 nm) | 97 - 99 parts by weight |
| Carbon (average size 270 nm) | 1 - 3 parts by weight |
| Nitro cellulose | 40 parts by weight |
| Polyurethane (containing 0.08 mmol/g of $-SO_3Na$) | 60 parts by weight |
| Methyl ethyl ketone | 450 parts by weight |
| Toluene | 450 parts by weight |
| Cyclohexanone | 100 parts by weight |

The above back coat paint C was dispersed in a sand mill, to which 20 parts by weight of a curing agent (Coronate L) was added. One hour after the addition, the paint was applied onto a nonmagnetic support. The ratio of the carbon having an average size of 19 nm and the carbon having an average size of 270 nm in the back coat paint C was changed within the above ranges of the contents, thereby forming six back coat layers having different surface roughnesses (center line average roughnesses, Ra) and different amounts of the protuberances of not smaller than 60 nm with respect to the height from the center line.

On the opposite side of the nonmagnetic support which had been formed with each of the six back coat layers on one side was applied with a magnetic paint B having the following composition, thereby forming a magnetic layer.

## Magnetic Paint B

| | |
|---|---|
| Magnetic metal powder<br>(specific surface area 55 m²/g) | 100 parts by weight |
| Vinyl chloride copolymer<br>(containing 0.12 mmol/g of $-SO_3Na$ and having<br>an average degree of polymerization of 380) | 12 parts by weight |
| Polyurethane<br>(containing 0.16 mmol/g of $-SO_3Na$ and having a number<br>average molecular weight of 24,000) | 12 parts by weight |
| Alumina (average size 0.3 $\mu$ m) | 10 parts by weight |
| Methyl ethyl ketone | 100 parts by weight |
| Toluene | 60 parts by weight |
| Cyclohexanone | 60 parts by weight |
| Butyl stearate | 1 part by weight |

The magnetic paint B was dispersed in a sand mill, after which 1 part by weight of stearic acid and 5 parts by weight of a curing agent (Coronate L) were added to give a magnetic paint. One hour after the addition, the paint was applied. An external magnetic field was applied to the resultant magnetic layer for orientation, followed by drying, calendering and curing at about 60°C to form a magnetic layer. Thus, sample tapes of Examples 9 to 14 were obtained.

The surface roughness (center line average roughness, Ra) and the amount of protuberances having a height from the center line of not smaller than 60 nm of the back coat layers of the respective sample tapes of Examples 9 to 14 are shown in Table 3.

For comparison, the back coat paint C was changed in that the amount of the carbon having an average size of 19 nm was in the range of from 90 to 100 parts by weight and the amount of the carbon having an average size of 270 nm was changed from 10 parts by weight to 0. In addition, the ratio of the two types of carbons and the dispersion time in the sand mill were controlled to obtain sample tapes for comparison having surface characteristics of the back coat layer as shown in Table 3.

These sample tapes were determined with respect to the Y-S/N and the friction coefficient, $\mu$, to obtain the results shown in Table 3. The friction coefficient, $\mu$, was measured by winding each sample tape about a reel and determining it under conditions of a temperature of 40°C and a relative humidity of 80% by the use of a polyoxyethylene guide (load, W = 20 g).

Table 3

| | Center Line Average Roughness Ra (nm) | Number of Protuberances (Number x $10^{-9}$/m²) | Y-S/N (dB) | Friction Co-efficient, $\mu$, of Back Coat Layer |
|---|---|---|---|---|
| Example 9 | 10.2 | 3.4 | + 1.5 | 0.37 |
| Example 10 | 13.4 | 5.1 | + 1.3 | 0.34 |
| Example 11 | 13.6 | 4.8 | + 1.2 | 0.35 |
| Example 12 | 14.0 | 6.7 | + 1.1 | 0.32 |
| Example 13 | 16.1 | 6.5 | + 1.0 | 0.32 |
| Example 14 | 18.3 | 8.2 | + 0.9 | 0.31 |
| Comp. Ex. 6 | 10.3 | 2.2 | + 1.4 | 0.59 |
| Comp. Ex. 7 | 19.1 | 2.6 | + 1.0 | 0.47 |
| Comp. Ex. 8 | 24.8 | 11.4 | 0 | 0.31 |
| Comp. Ex. 9 | 27.4 | 21.1 | -1.6 | 0.32 |

Note: the Y-S/N value was a relative value when the tape of Comparative Example 8 was taken as 0 dB.

From Table 3, good Y-S/N values are obtained when the center line average roughness, Ra, of the back coat layer was not larger than 20 nm as in Examples 9 to 14 and Comparative Examples 6 and 7, but when the center line average roughness, Ra, of larger than 20 nm as in Comparative Examples 8 and 9, the Y-S/N was not improved at all. Especially, with regard to Example 9 wherein the center line average roughness, Ra, of the back coat layer is 10.2 nm, the Y-S/N is improved by about 3 dB over that the Comparative Example 9.

Contrary to the results of the Y-S/N, the friction coefficient, $\mu$, is relatively good in Examples 9 to 14 and Comparative Examples 8 and 9 except for Comparative Examples 6 and 7.

From the above results, it will be seen that when the center line average roughness, Ra, of the back coat layer is determined to be not larger than 20 nm and the number of protuberances having a height from the center line of not smaller than 60 nm is in the range of from $3 \times 10^9$ to $9 \times 10^9$/m², the electromagnetic conversion characteristics are improved with good runnability.

As will be apparent from the foregoing, the magnetic recording medium of the invention includes a back coat layer whose center line average roughness, Ra, is not larger than 20 nm, so that good electromagnetic conversion characteristics are obtained with reduced degrees of stickiness and a reduced number of dropout defects. In addition, the protuberances on the surface of the back coat layer and having a height from the center line of not smaller than 60 nm are $3 \times 10^9$ to $9 \times 10^9$/m² in number, so that the electromagnetic conversion characteristics are suppressed from degradation with improved runnability.

**Claims**

1. A magnetic recording medium which comprises a nonmagnetic support, a magnetic layer formed on one side of the nonmagnetic support, and a back coat layer formed on the other side of the nonmagnetic support and made of a dispersion of nonmagnetic particles in a resin binder, the back coat layer having (1) a center line average roughness, Ra, of Ra $\leq$ 20 nm, and (2) the number of protuberances, n, having a height from the center line of not smaller than 60 nm per unit area by m² of the back coat layer of $3 \times 10^9 \leq n \leq 9 \times 10^9$.

2. The magnetic recording medium according to Claim 1, wherein Ra is in the range of from 8 to 18 nm.

3. The magnetic recording medium according to Claim 1, wherein said nonmagnetic particles are carbon black particles.

4. The magnetic recording medium according to Claim 3, wherein said carbon black particles are a mixture of two types of carbon black particles, one having a particle size of from 15 to 25 nm and the other having a particle size of from 250 to 400 nm.

5. The magnetic recording medium according to Claim 4, wherein the carbon black particles having a smaller size are contained in an amount of net less than 90 wt% based on the mixture.

6. The magnetic recording medium according to Claim 1, wherein said back coat layer further comprises at least one fatty acid having not less than 12 carbon atoms.

7. The magnetic recording medium according to Claim 6, wherein said at least one fatty acid is used in an amount of from 0.3 to 6 parts by weight per 100 parts by weight of the nonmagnetic particles.

**Patentansprüche**

1. Magnetisches Aufzeichnungsmedium, umfassend einen nichtmagnetischen Träger, eine auf einer Seite des nichtmagnetischen Trägers gebildete Magnetschicht und eine auf der anderen Seite des nichtmagnetischen Trägers gebildete und aus einer Dispersion aus nichtmagnetischen Teilchen in einem Harzbindemittel hergestellte Rückendeckschicht, wobei die Rückendeckschicht (1) eine Zentrumslinien-Durchschnittsrauhigkeit, Ra, von Ra ≦ 20 nm und (2) eine Anzahl von Protuberanzen, n, welche von der Zentrumslinie aus eine Höhe von nicht weniger als 60 nm pro Einheitsfläche in m² der Rückendeckschicht aufweisen, von $3 \times 10^9 \leqq n \leqq 9 \times 10^9$ besitzt.

2. Magnetisches Aufzeichnungsmedium nach Anspruch 1, worin Ra im Bereich von 8 bis 18 nm liegt.

3. Magnetisches Aufzeichnungsmedium nach Anspruch 1, wobei die nicht-magnetischen Teilchen Rußteilchen sind.

4. Magnetisches Aufzeichnungsmedium nach Anspruch 3, wobei die Rußteilchen eine Mischung aus zwei Typen von Rußteilchen sind, wobei einer eine Teilchengröße von 15 bis 25 nm und der andere eine Teilchengröße von 250 bis 400 nm besitzt.

5. Magnetisches Aufzeichnungsmedium nach Anspruch 4, wobei die Rußteilchen, welche eine kleinere Größe besitzen, in einer Menge von nicht weniger als 90 Gew.-%, bezogen auf die Mischung, enthalten sind.

6. Magnetisches Aufzeichnungsmedium nach Anspruch 1, wobei die Rückendeckschicht weiterhin mindestens eine Fettsäure mit nicht weniger als 12 Kohlenstoffatomen umfaßt.

7. Magnetisches Aufzeichnungsmedium nach Anspruch 6, wobei die besagte, mindestens eine Fettsäure in einer Menge von 0,3 bis 6 Gew.-Teilen pro 100 Gew.-Teile der nichtmagnetischen Teilchen, verwendet wird.

**Revendications**

1. Support d'enregistrement magnétique qui comprend un support non magnétique, une couche magnétique formée sur une face du support non magnétique et une couche de revêtement dorsal formée sur l'autre face du support non magnétique et faite d'une dispersion de particules non magnétiques dans un liant résineux, la couche de revêtement dorsal ayant (1) une rugosité moyenne arithmétique Ra ≦ 20 nm et (2) un nombre n de protubérances ayant une hauteur au-dessus de la ligne de centre de pas moins de 60 nm de haut par m² de la couche de revêtement dorsal qui répond à la relation de $3 \times 10^9 \leqq n \leqq 9 \times 10^9$.

2. Support d'enregistrement magnétique selon la revendication 1, dans lequel Ra est dans l'intervalle de 8 à 18 nm.

3. Support d'enregistrement magnétique selon la revendication 1, dans lequel lesdites particules non magnétiques sont des particules de noir de carbone.

4. Support d'enregistrement magnétique selon la revendication 3, dans lequel lesdites particules de noir de carbone sont un mélange de deux types de particules de noir de carbone ayant l'un une dimension de particule de 15 à 25 nm et l'autre une dimension de 250 à 400 nm.

5. Support d'enregistrement magnétique selon la revendication 4, dans lequel les particules de noir de carbone ayant une dimension plus faible sont présentes en quantité de pas moins de 90 % en poids par rapport au mélange.

6.  Support d'enregistrement magnétique selon la revendication 1, dans lequel ladite couche de revêtement dorsal comprend en outre au moins un acide gras en $C_{12}$ ou plus.

7.  Support d'enregistrement magnétique selon la revendication 6, dans lequel ledit acide gras au moins est utilisé en quantité de 0,3 à 6 parties en poids pour 100 parties en poids des particules non magnétiques.